# EUROPEAN PATENT SPECIFICATION

(11) **EP 0 256 098 B1**
(45) Date of publication and mention of the grant of the patent: **21.04.1993**
(21) Application number: 87901400.9
(22) Date of filing: 30.01.1987
(51) Int. Cl.: G02C 1/02, G02C 1/04, G02C 5/22

(54) **LENS HOLDING MEANS FOR GLASSES, PARTICULARLY FOR RIMLESS GLASSES**
LINSENHALTERUNG FÜR BRILLEN, INSBESONDERE FÜR RAHMENLOSE BRILLEN
SUPPORT POUR VERRES DE LUNETTES, DE PREFERENCE SANS MONTURE

(30) Priority: 30.01.1986 DK 449/86
(43) Date of publication of application: 24.02.1988
(60) Divisional application: 92202873.3
(73) Proprietor: LINDBERG, Poul J., DK-8250 Ega (DK)
(72) Inventor: DISSING, Hans, DK-1879 Kobenhavn V. (DK); LINDBERG, Poul, Jorn, DK-8250 Ega (DK)
(74) Representative: Smulders, Theodorus A.H.J., Ir.
(86) International application number: DK8700008
(87) International publication number: WO8704806

(56) References cited:
- DE-C- 807 561
- FR-A- 1 087 904
- FR-E- 62 079
- US-A- 718 363
- US-A- 943 085
- US-A- 2 439 357

## Description

The present invention relates to eyeglasses having lenses and frame portions in holding engagement with the lenses, the frame portions including outermost hinges associated with pivotal side bars, said hinges being made of wire material so as to comprise as one hinge part a central straight pintle wire portion and as the other hinge part a coil wound wire portion surrounding the pintle wire portion, and primarily to eyeglasses with frame portions entirely or almost entirely made of wire material. With modern wire materials and shaping techniques it is advantageous to produce eyeglass frames from wire material, as only bending and cutting operations will be required.

However, the eyeglass temples present a special problem in that normally they are constituted by moulded parts assembled by screws, this not being directly imitable by bent wire means.

According to the proposal disclosed in US-A-718,363 said hinge problem can be dealt with by providing a direct transition between each side bar and the adjacent lens holding means by a coiled wire portion acting as a spring when the side bar is swung in and out. This effect is highly undesirable in modern eyeglasses, and besides it will be felt as undesirable or highly unnatural that the side bars can be swung outwardly unlimited, e.g. into positions flush with the lenses. According to the normal behaviour of side bars these should be prevented from swinging out more than to a position substantially perpendicular to the common plane of the lenses.

The object of the invention is to provide eyeglasses of the type specified in the introductory paragraph having hinges made of wire material and acting as well known hinges consisting of parts assembled by screws.

According to the present invention this achieved in that the two hinge parts are materially separated such that they are freely mutually rotatable within normal limits without the coil portion acting as a torsion spring, the coil portion being held axially between wire portions bent out from the respective opposed ends of the pintle wire portion, and in that a rotation stop for the side bars is provided by a free wire end at one end of the coil portion, this free wire end abutting one of said bent-out portions of the pintle wire when the side bars are being swung outwardly beyond their positions of use. The hinge parts of the temple will hereby be mutually freely rotatable without any inconvenient spring action and yet there will be established a desirable stop for the swinging-out of the side bars, all achieved solely by bending and cutting operations on the wire material. The coiled portion can be made with high accuracy so as to be held on the pintle wire portion with a very light clip fit providing for a desirable degree of friction in the hinge.
It is an advantageous possibility that the hinge can be made in such a manner that it will act as a swing stop as desired, but nevertheless allow the side bars to swing further outwardly in case of pronounced overload, thus preventing damage of the hinge or other parts of the structure in such a situation.

In the following the invention is described in more detail with reference to the drawing in which
Fig. 1 is a perspective exploded view of a pair of eyeglasses with the hinge construction according to the invention,
Fig. 2 is a perspective view of the eyeglass hinge construction,
Fig. 3 is a cross sectional view of a joint area thereof,
Fig. 4 is a front view of a pair of semi-rimless eyeglasses with the hinge construction according to the invention, and
Fig. 5 is a corresponding view of another pair of semi-rimless eyeglasses with the hinge construction according to the invention.

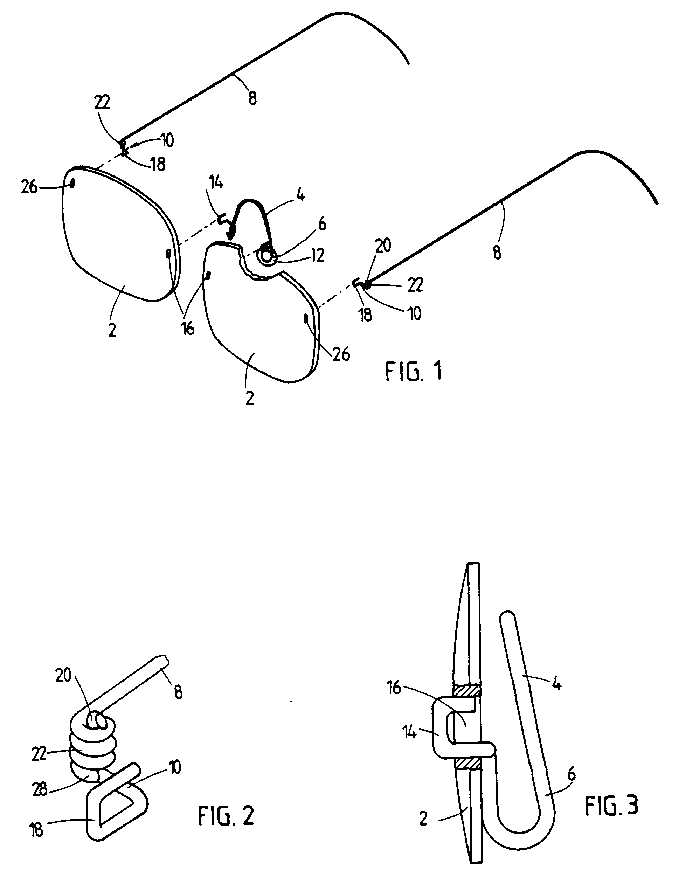

The pair of eyeglasses shown in Figs. 1-3 comprises two lenses 2, a bridge 4 with pad arms 6, and two side bars or temples 8, each having a hinge construction 10 for mounting on the lenses,

The bridge is made of a rather stiff, but pronouncedly resilient wire material, preferably titanium wire, and is bent for forming the pad arms 6, which constitute downwardly projecting U-shaped loops, in which is inserted a holding base portion for a nose pad 12, which may consist of e.g. semi-soft plastic. From these loops the wire ends extend slightly laterally outwards and then forwards, upwards, and backwards through a forwardly projecting loop portion 14, in which the horizontal wire portions run parallelwise.

The loop portions 14 are designed for insertion into or through oblong holes 16 in the lenses 2, these holes being provided with great accuracy for achieving a good securing.

The hinge constructions 10 are likewise made of wire and show corresponding loop portions, here designated 18, wherefrom the wire continues slightly outwards to the side and therefrom upwards for forming a hinge pintle 20.

About this wire is placed the foremost, screw coiled end portion 22 of the associated temple 24, which is also made of said wire material. After placing the screw coil on the pintle 20 the upper end therof is bent out for axial locking of the screw coil, whereafter this is only turnable about the pintle, preferably with a certain friction. The rear, bent ear portions of the temples may of course if desired be coated with an appropriate coating material.

The loop portion 18 is designed for insertion into or through oblong holes 26 in the lenses 2, corresponding to the holes 16.

From the parts shown in Fig. 1 the eyeglasses are assembled by inserting the loop portions 14 and 18 into the holes 16 and 26. Because of the oblong shape of the holes and the loop portions, no rotation may occur between the assembled parts.

The screw coil in each of the hinge constructions 10 extends downwards from the front end of the temple 8 and ends in a lower end portion 28, see Fig.2, which, by outward rotation of the temple, will abut the wire portion extending laterally from the loop portion 18, such that the rotation stop which is normal for eyeglasses or temples is formed in a simple manner.

The loop portions 14 and 18 should extend all the way to the front face of the lenses 2 for optimizing the fastening, but as indicated in Fig. 3 they should preferably protrude somewhat in front of the front face of the lenses, whereby it may optionally apply that a resilient expansion effect of the outer ends of the loop portions may be exploited for the fastening. Another effect of the protruding loop portions is that they will be able to fasten additional glasses in an easily releasable manner, when these glasses are provided with appropriate holes corresponding to the holes 16 and 26 in the lenses 2. These additional glasses may be extra lens glasses, e.g. half lenses for reading, or they may be sun shade glasses or other special glasses which may be mounted in an extremely discreet manner.

The user will even in a simple manner be able to make use of one and the same frame for different sets of lenses, though in practice this will hardly be decisive as the wire frame is quite cheap to produce.

It should be mentioned that the preferred wire material, i.e. titanium wire, has the quality that it can be given different colours by a tempering technique based on electric heating, whereby it is possible to obtain a surface colouring with several different colours along the temples, and such a colouring or multi-colouring of the temples will be comprised by the invention, as it is widely known that cosmetic factors in connection with eyeglasses may have a very great significance for production and sales.

As far as the special hinges according to the invention are concerned, cf. Fig. 2, the rotation stop as established between an end portion of the screw coil 22 and a radial wire portion 10 of the other hinge part is indeed an operative stop which in practical use hinders the temple from being swung further than the swung-out position of use, but which, however, has a possibility for allowing the temple to be swung further outwards in case of pronounced overload, without the hinge being broken or the connected wire portions being durably deformed; the screw coil 22 may in itself be slightly resiliently compressible, such that at the overload the stop end 28 may pass above the blocking wire 10 without any breaking or durable deformation of the hinge constructions. This is a great advantage of the invention compared to usual eyeglass hinges, which are normally durably damaged if overloaded.

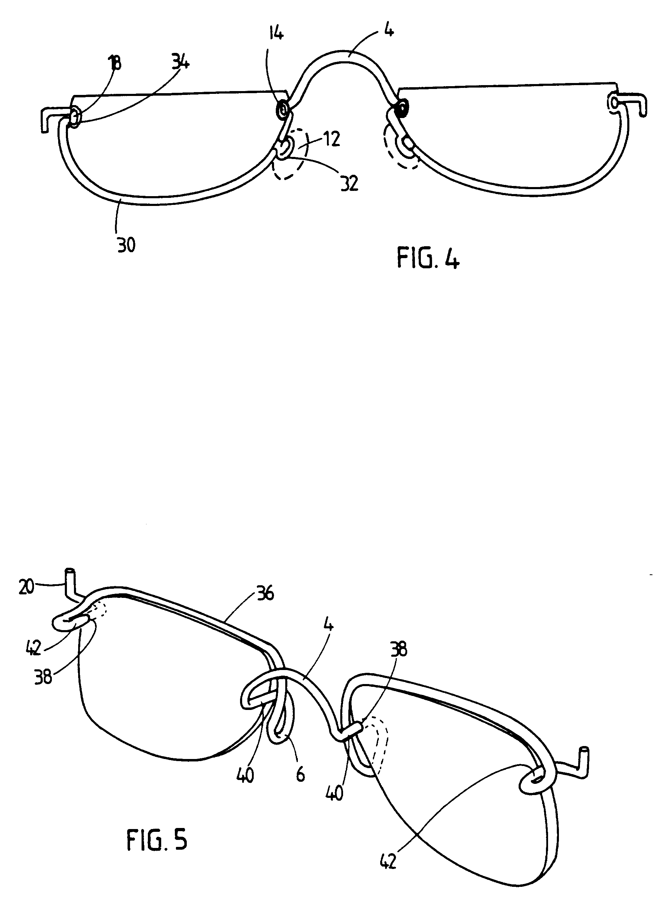

By the eyeglasses shown in Fig. 4 the hinge constructions are shaped just as in Fig. 2, although the hinge pintle has a reversed direction and the wire loop 18 is continued in a wire 30 which extends downwards and inwards along the rim of the lens 2, to a rearwardly bent loop portion 32 for fastening the pad 12, and further on to connection to the loop portion 14 also indicated in Fig. 1, i.e. the wire continues in this loop portion and extends therefrom further upwards to and through the bridge 4, whereafter the wire extends in a symmetrical manner out along the outer lens. Thus, a single through-going frame wire will be concerned, the free ends of which are located at the opposite outer hinge areas, and the hinge construction may hereby be shaped principally or even precisely as indicated in Fig. 2. The frame production as well as the mounting will be facilitated by the frame thus consisting of but a single wire member. The holder loops 14 and 18 are protruding as in Fig. 3, and they are shown received in edge recesses 34 in the lenses, being held in this engagement by means of a resilient tension in the frame.

In Fig. 5 is shown an example where a through-going frame wire 36, which extends along the upper edge of the lenses, secures the lenses by means of single-wire portions, which are received in semi-circular recesses 38 in the lenses. Such wire portions, designated 40 and 42, extend forwards from the lenses and continue in the frame in the manner indicated , to the bridge 4 and the hinge pintles 20 to be completed with side bars or temples 8 each provided with a coiled portion 22 as shown in Fig.2.

## Claims

1. Eyeglasses having lenses (2) and frame portions (10, 4) in holding engagement with the lenses, the frame portions including outermost hinges associated with pivotal side bars (8), said hinges being made of wire material so as to comprise as one hinge part a central straight pintle wire portion (20) and as the other hinge part a coil wound wire portion (22) surrounding the pintle wire portion, characterized in that the two hinge parts (20, 22) are materially separated such that they are freely mutually rotatable within normal limits without the coil portion (22) acting as a torsion spring, the coil portion being held axially between wire portions (20, 10) bent out from the respective opposed ends of the pintle wire portion, and in that a rotation stop for the side bars (8) is provided by a free wire end (28) at one end of the coil portion (22), this free wire end abutting one of said bent-out portions (10) of the pintle wire (20) when the side bars are being swung outwardly beyond their positions of use.

2. Eyeglasses according to claim 1, characterized in that the rotation stop is provided in such a manner that in case of excessive overloading by an outward pivoting of a side bar (8) it will yield resiliently and allow the side bar to be swung out beyond its normal position of use without this causing any durable deformation of the hinge parts.

3. Eyeglasses according to claim 1, characterized in that a first (10) of said bent-out portions of the pintle wire continues into lens holding means (18) and serves as one part of said rotation stop engageable by said free wire end of the coil portion, the opposite end of the coil portion continuing into the associated side bar and being held axially by the second of said bent-out portions of the pintle wire, this portion (20) terminating immediately adjacent the said opposite end of the coil portion.

4. Eyeglasses according to claim 1, characterized in that the wire material is of titanium treated by tempering so as to be coloured.

## Patentansprüche

1. Brille mit Linsen (2) und mit in festem Eingriff mit den Linsen stehenden Gestellteilen (10, 4), welche Gestellteile außenliegende, mit gelenkigen Bügeln (8) verbundene Scharniere aufweisen, die derart aus Drahtmaterial hergestellt sind, daß der eine Scharnierteil aus einem mittigen geraden Stiftdrahtteil (20) und der andere Scharnierteil aus einem den Stiftdrahtteil umgebenden, spiralförmig gewundenen Drahtteil (22) besteht, dadurch gekennzeichnet, daß die zwei Scharnierteile (20, 22) derart getrennt voneinander sind, daß sie innerhalb normaler Grenzen frei drehbar zueinander sind, ohne daß der Spiralteil (22) als Torsionsfeder wirkt, wobei der Spiralteil axial zwischen Drahtteilen (20, 10) gehalten wird, die von den jeweils gegenüberliegenden Enden des Stiftdrahtteiles auswärts gebogen sind, und daß ein Anschlag für die Bügel (8) von einem freien Drahtende (28) an einem Ende des Spiralteiles (22) gebildet ist, welches freie Drahtende gegen einen der auswärts gebogenen Teile (10) des Stiftdrahtes (20) anschlägt, wenn die Bügel auswärts an ihren Gebrauchsstellungen vorbeigeschwenkt werden.

2. Brille nach Anspruch 1, dadurch gekennzeichnet, daß der Anschlag derart angeordnet ist, daß dieser im Falle einer exzessiven Überlastung durch ein Auswärtsschwenken eines Bügels (8) elastisch nachgibt und den Bügel an seiner normalen Gebrauchsstellung vorbeischwenken läßt, ohne daß dadurch irgendeine dauerhafte Verformung der Scharnierteile entsteht.

3. Brille nach Anspruch 1, dadurch gekennzeichnet, daß ein erster (10) der auswärts gebogenen Teile des Stiftdrahtes sich in eine Linsenhalterung (18) fortsetzt und als ein Teil des Anschlags dient, der im Eingriff mit dem freien Drahtende des Spiralteiles steht, wobei das gegenüberliegende Ende des Spiralteiles sich in den zugehörigen Bügel fortsetzt und axial von dem zweiten der auswärts gebogenen Teile des Stiftdrahtes gehalten wird, welcher Teil (20) in unmittelbarer Nähe des gegenüberliegenden Endes des Spiralteiles endet.

4. Brille nach Anspruch 1, dadurch gekennzeichnet, daß das Drahtmaterial aus Titan besteht, das durch Tempern behandelt ist, um gefärbt zu werden.

## Revendications

1. Lunettes ayant des verres (2) et des parties de monture (10,4) servant de support aux verres, les parties de monture comprenant aux extrémités des charnières reliées à des branches latérales pivotantes (8), lesdites charnières étant faites d'un matériau métallique de façon à comprendre comme premier élément de charnière, une portion centrale de fil droit servant de pivot (20) et comme deuxième élément de charnière, une portion de fil spiralé (22) entourant la portion de fil pivot, caractérisées en ce que les deux éléments de charnière (20, 22) sont matériellement séparés de façon à tourner librement l'un par rapport à l'autre dans des limites normales sans que la portion spiralée (22) ne fasse ressort, la portion spiralée étant axialement soutenue entre des portions de fil (20, 10) pliées par rapport aux extrémités opposées respectives de la portion de fil pivot, et en ce qu'un système d'arrêt de rotation est fourni pour les branches latérales (8) par une extrémité de fil libre (28) à une extrémité de la portion spiralée (22), cette extrémité de fil libre venant buter contre une desdites portions pliées (10) du fil pivot (20), lorsque les branches latérales sont écartées au-delà de leurs positions d'utilisation.

2. Lunettes selon la revendication 1, caractérisées en ce que l'élément d'arrêt de rotation est conçu de façon à céder avec une certaine élasticité en cas de surcharge excessive causée par une rotation d'une branche latérale (8) vers l'extérieur et à permettre à la branche latérale d'être écartée vers l'extérieur au-delà de sa position normale d'utilisation sans risque de déformation durable des éléments de charnière.

3. Lunettes selon la revendication 1, caractérisées en ce que la première (10) desdites portions pliées du fil pivot se prolonge en supports pour verres (18) et constitue une des parties dudit système d'arrêt de rotation contre laquelle peut buter ladite extrémité libre de la portion spiralée, l'extrémité opposée de la portion spiralée étant prolongée par la branche latérale correspondant et étant soutenue axialement par la seconde desdites portions pliées du fil pivot, cette portion (20) se terminant directement dans un plan adjacent à ladite extrémité opposée de la portion spiralée.

4. Lunettes selon la revendication 1, caractérisées en ce que le matériau métallique est du titane traité par trempe pour être coloré.
